# EUROPEAN PATENT APPLICATION

(11) **EP 4 099 485 A1**
(43) Date of publication of application: **07.12.2022**
(21) Application number: 20916747.7
(22) Date of filing: 11.12.2020
(51) Int. Cl.: H01M 50/20, B25F 5/00, H01M 10/0562, H01M 10/615, H01M 10/6235, H01M 10/647, H01M 10/658

(54) **BATTERY PACK AND ELECTRIC TOOL**

(30) Priority: 29.01.2020 JP 2020012991
(71) Applicant: Panasonic Intellectual Property Management Co., Ltd., Osaka-shi, Osaka 540-6207 (JP)
(72) Inventor: MURUI, Itaru, Osaka-shi, Osaka 540-6207 (JP)
(74) Representative: Müller-Boré & Partner Patentanwälte PartG mbB
(86) International application number: PCT/JP2020/046416
(87) International publication number: WO 2021/153041

(57) **Abstract**

An object of the present disclosure is to reduce failures in a battery pack. A battery pack (30) is a battery pack (30) for an electric tool. The battery pack (30) is attachable to a tool body. The tool body includes a tool attachment part to which a tool (40) is to be attached and a driver configured to drive the tool (40). The battery pack (30) includes an electricity accumulator (36), a battery case (31), and a cushioning structure (38). The electricity accumulator (36) includes an all-solid-state battery (35). The electricity accumulator (36) is configured to accumulate electric power to be supplied to the driver. The battery case (31) houses the electricity accumulator (36). The cushioning structure (38) is configured to suppress acceleration acting on the electricity accumulator (36) from being changed.

## Description

### Technical Field

The present disclosure generally relates to battery packs and electric tools and specifically to a battery pack to be applied to an electric tool and the electric tool including the battery pack.

### Background Art

Patent Literature 1 discloses an electric power tool including a battery pack.

The battery pack is attachable to a grip portion of a main body of the electric power tool. As rechargeable cells in the battery pack, lithium-ion cells are used. In the battery pack, the plurality of rechargeable cells are laid to extend in the left-right direction and arranged side by side in the front-rear direction.

### Citation List

### Patent Literature

Patent Literature 1: JP 2007-136605 A

### Summary of Invention

When rechargeable cells in a battery pack are liquid cells such as lithium-ion cells as in the case of the battery pack of the electric power tool disclosed in Patent Literature 1, an impact applied to the battery pack may lead to a failure such as liquid leakage.

It is an object of the present disclosure to reduce failures in the battery pack.

A battery pack according to an aspect of the present disclosure is a battery pack for electric tool. The battery pack is attachable to a tool body. The tool body includes a tool attachment part to which a tool is to be attached and a driver configured to drive the tool. The battery pack includes an electricity accumulator, a battery case, and a cushioning structure. The electricity accumulator includes an all-solid-state battery. The electricity accumulator is configured to accumulate electric power to be supplied to the driver. The battery case houses the electricity accumulator. The cushioning structure is configured to suppress acceleration acting on the electricity accumulator from being changed.

An electric tool according to an aspect of the present disclosure includes the battery pack and the tool body.

### Brief Description of Drawings

FIG. 1 is a sectional view of a battery pack according to an embodiment;
FIG. 2 is a perspective view of the battery pack;
FIG. 3 is a side view of the battery pack before attached to a tool body of an electric tool; and
FIG. 4 is a side view of a battery pack according to a first variation.

### Description of Embodiments

A battery pack 30 and an electric tool 1 including the battery pack 30 according to an embodiment will be described below with reference to the drawings. Note that the embodiment described below is a mere example of various embodiments of the present disclosure. Various modifications may be made to the embodiment described below as long as the object of the present disclosure is achieved. Moreover, figures described in the following embodiment are schematic views, and therefore, the ratio of sizes and the ratio of thicknesses of components in the drawings do not necessarily reflect actual dimensional ratios.

### (1) Overview

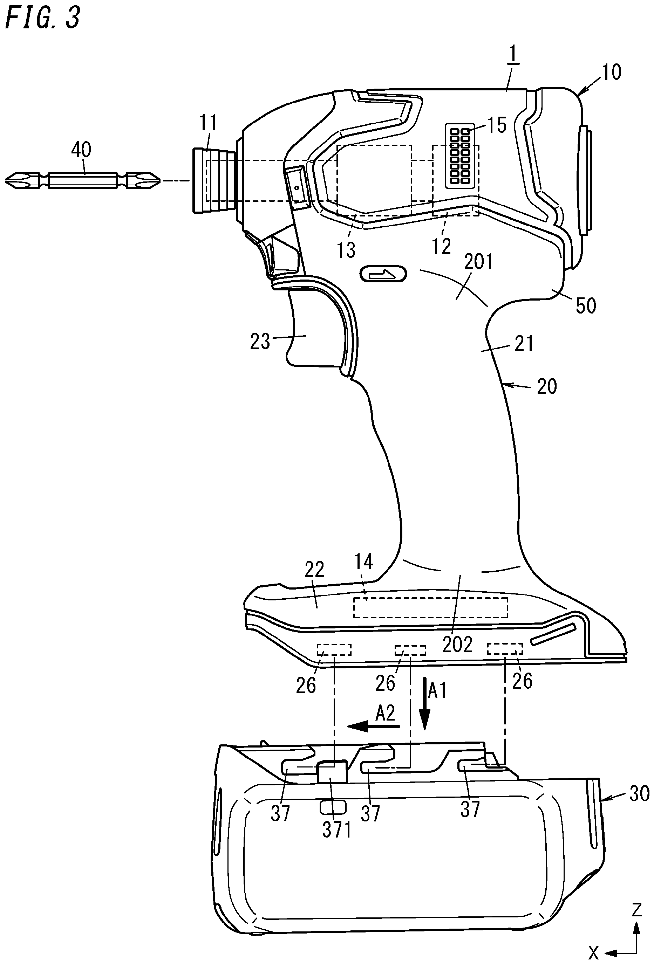

As shown in FIG. 3, the electric tool 1 according to the present embodiment is a hand-held motor-operated electric tool, and examples of the electric tool 1 include electric screw drivers, electric drills, electric wrenches, and electric grinders.

The electric tool 1 includes a tool body 50 and the battery pack 30.

The tool body 50 includes a tool attachment part 11 to which a tool 40 is to be attached and a driver 12 configured to drive the tool 40. The battery pack 30 is to be attached to the tool body 50.

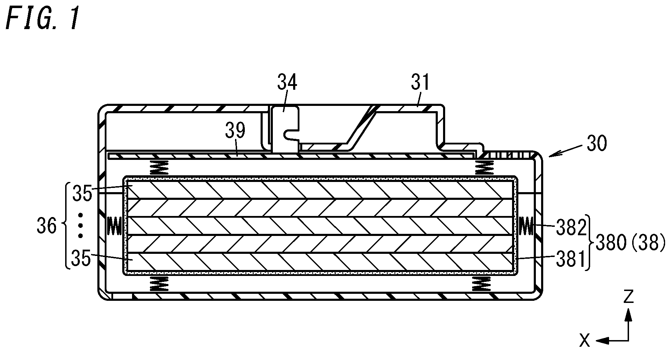

As shown in FIG. 1, the battery pack 30 includes an electricity accumulator 36, a battery case 31, and a cushioning structure 38. The electricity accumulator 36 includes all-solid-state batteries 35. The electricity accumulator 36 accumulates electric power to be supplied to the driver 12 of the tool body 50. The battery case 31 houses the electricity accumulator 36. The cushioning structure 38 suppresses acceleration acting on the electricity accumulator 36 from being changed.

The battery pack 30 includes the cushioning structure 38 which suppresses the acceleration acting on the electricity accumulator 36 from being changed. Thus, for example, even when an impact is applied to the battery case 31 or a vibration is applied to the battery case 31, the impact and the vibration are suppressed from being applied to the electricity accumulator 36. This can reduce failures in the electricity accumulator 36 and can thus reduce failures in the battery pack 30.

### (2) Details

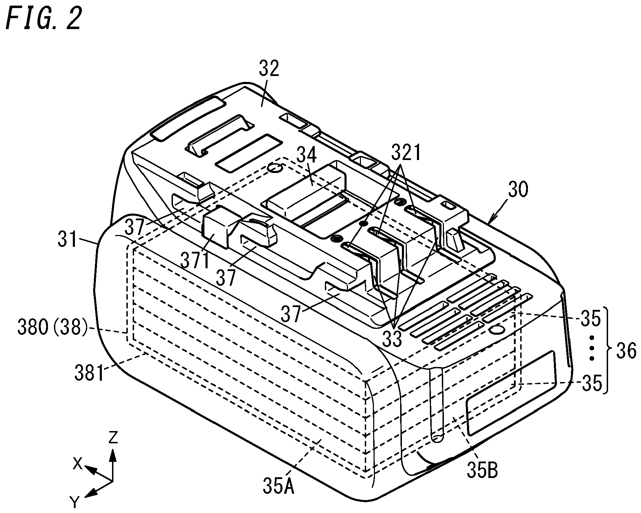

The electric tool 1 and the battery pack 30 of the present embodiment will be described in further detail below with reference to the drawings. In the following description, the X-axis direction in FIG. 2 is defined as a forward/backward direction, the Y-axis direction is defined as a left/right direction, and the Z-axis direction is defined as an up/down direction. Moreover, the positive direction of the X-axis direction is defined as a forward side, the positive direction of the Y-axis direction is defined as a left side, and the positive direction of the Z-axis direction is defined as an upper side. Note that these directions are mere examples and are not to limit the direction of the electric tool 1 in use. Additionally, the arrows and the like representing the directions in figures are described only for facilitating understanding and are intangible.

### (2.1) Tool Body

First of all, the tool body 50 will be described.

As shown in FIG. 2, a housing of the tool body 50 includes a body part 10 and a grip part 20. In the present embodiment, the body part 10 and the grip part 20 are provided as an integrated part.

The body part 10 is, for example, an electrically insulating molded product made of a synthetic resin. The body part 10 has a tubular shape extending in the forward/backward direction.

The body part 10 has a forward end provided with the tool attachment part 11 to which the tool 40 such as a tip tool is to be attached. The body part 10 houses the driver 12 and a transfer unit 13. In the body part 10, a heat exhausting part 15 for discharging heat generated by the driver 12 to the outside of the body part 10 is provided around the driver 12. The heat exhausting part 15 has a plurality of holes.

The tool attachment part 11 is provided to the body part 10 so as to be rotatable around a rotation axis along the forward/backward direction. In accordance with a plurality of kinds of work for which the electric tool 1 is used, a plurality of types of tools 40 are prepared, and a desired type of tool 40 is attached to the tool attachment part 11 and is used. Examples of such types of tools 40 include driver bits for tightening screws, drill bits for boring, and sockets for tightening nuts.

The driver 12 includes an electric motor driven by electric power supplied from the battery pack 30. The electric motor is driven by the electric power, thereby generating heat.

The transfer unit 13 transmits driving force of the driver 12 to the tool attachment part 11. The transfer unit 13 is coupled to an output shaft of the electric motor of the driver 12 and transmits rotation of the electric motor to the tool attachment part 11, thereby rotating the tool attachment part 11. The transfer unit 13 may include a deceleration mechanism, a clutch mechanism, an impact mechanism, and the like.

The grip part 20 is, for example, an electrically insulating molded product made of a synthetic resin. The grip part 20 extends downward from a part of a peripheral surface of the body part 10. The grip part 20 has a longitudinal direction along the up/down direction. The grip part 20 has a grip portion 21 at its intermediate portion in the up/down direction (the longitudinal direction). The grip portion 21 is to be gripped by a user with his/her hand. The grip part 20 has ends 201 and 202 on both sides of the grip portion 21, and one (upper) end 201 is connected to the body part 10, and the other (lower) end 202 is provided with a battery attachment 22 to which the battery pack 30 is to be attached.

At the forward side of the grip portion 21 of the grip part 20, a trigger 23 is provided at a portion close to the end 201 connected to the body part 10. The trigger 23 is an operating unit configured to receive an operation given by a user to control rotation of the driver 12. The trigger 23 is operated by, for example, the index finger of a user who holds the grip part 20.

The battery attachment 22 is provided integrally with the lower end 202 of the grip part 20. The battery attachment 22 protrudes from the lower end 202 of the grip part 20 in a direction orthogonal to the up/down direction. The battery attachment 22 is in the shape of a box whose dimension in the up/down direction is smaller than each of the dimensions in the forward/backward direction and the left/right direction. The battery attachment 22 has a lower portion to which the battery pack 30 is to be detachably attached. That is, the battery pack 30 is detachably attached to the tool body 50.

The battery attachment 22 has a lower surface having a recess into which an upper portion of the battery pack 30 is to be inserted. In the recess, a plurality of hooking pieces 26 are provided. Moreover, the recess has a bottom surface provided with: a plurality of connection terminals for feeding of electric power; and a first connector for signals.

The plurality of hooking pieces 26 are portions to be inserted into insertion grooves 37 of the battery pack 30. The insertion grooves 37 will be described later. The hooking pieces 26 are each in the shape of a rectangular parallelepiped and vertically protrude from inner side surfaces on left and right sides of the recess. The connection terminals are portions to be electrically connected to connection terminal parts 33 of the battery pack 30. The connection terminal parts 33 will be described later. For example, two connection terminals (a connection terminal on a positive electrode side and a connection terminal on a negative electrode side) are provided. The connection terminals are disposed at a rear part of the bottom surface of the battery attachment 22 to protrude forward and are aligned at intervals in the left/right direction. The first connector is a portion to be electrically connected to a second connector 34 of the battery pack 30. The second connector 34 will be described later. The first connector is disposed at a center part in the forward/backward direction on the bottom surface of the battery attachment 22.

Moreover, in the present embodiment, the battery attachment 22 houses a controller 14 (see FIG. 3). The controller 14 includes a circuit board on which a circuit for controlling the driver 12 and the like are mounted. The controller 14 is electrically connected to the connection terminals and the first connector and is operated by electric power supplied from the connection terminals. The controller 14 is configured to switch on the driver 12 in response to a pulling operation given to the trigger 23. Moreover, the controller 14 controls the rotational speed of the driver 12, that is, the rotational speed of the tool 40 attached to the tool attachment part 11 in accordance with the pulled amount of the trigger 23. The controller 14 performs switching control of, for example, a switching device, such as a Field Effect Transistor (FET), disposed on the circuit board, thereby controlling the rotational speed of the driver 12.

### (2.2) Battery Pack

The battery pack 30, which is a power supply of the electric tool 1, will be described.

The battery pack 30 serves as a power supply for operating the electric tool 1. The battery pack 30 includes the electricity accumulator 36 including the all-solid-state batteries 35 and the battery case 31 in which the electricity accumulator 36 is housed. The battery case 31 is an electrically insulating molded piece made of a synthetic resin and has a box shape.

The battery case 31 is provided with an engagement part 32 on an upper part thereof at a center part in the left/right direction as shown in FIG. 2. The engagement part 32 is in the shape of a platform and is higher by one step than both side parts in the left/right direction. The engagement part 32 has a rear part having three slits 321 provided with intervals therebetween in the left/right direction. Each slit 321 is open in a rear surface and an upper surface of the engagement part 32 and extends along the forward/backward direction. In each slit 321, the connection terminal part 33 electrically connected to the connection terminal of the tool body 50 is disposed. Each connection terminal part 33 is electrically connected to the electricity accumulator 36 housed in the battery case 31.

Moreover, on the upper surface of the engagement part 32, the second connector 34 electrically connected to the first connector of the tool body 50 is disposed. The second connector 34 is electrically connected to a circuit board and the like housed in the battery case 31. The circuit board acquires battery information representing information on the battery pack 30 (e.g., a voltage value and a temperature of the electricity accumulator 36) and outputs the battery information via the first connector and the second connector 34 to the controller 14 disposed in the battery attachment 22. Moreover, the engagement part 32 has left and right side surfaces having a plurality of insertion grooves 37 into which the plurality of hooking pieces 26 disposed in the recess in the lower surface of the battery attachment 22 are to be inserted on a one-to-one basis.

To attach the battery pack 30 to the battery attachment 22, as shown in FIG. 3, the tool body 50 is moved downward (in a direction indicated by arrow A1 in FIG. 3) from above the battery pack 30, and thereby, the engagement part 32 of the battery pack 30 is inserted into the recess formed in the lower surface of the battery attachment 22. Then, the tool body 50 is moved by being slid forward (in a direction indicated by arrow A2 in FIG. 3) with respect to the battery pack 30, and thereby, the hooking pieces 26 of the battery attachment 22 are inserted into the respective insertion grooves 37. At the back of a frontmost insertion groove 37 of the plurality of insertion grooves 37, a lock piece 371 is disposed. The lock piece 371 is pressed upward by an elastic member, such as a spring, and to attach the battery pack 30 to the battery attachment 22, the lock piece 371 is depressed downward by being pushed by the hooking piece 26, and therefore, the hooking piece 26 can move into the insertion grooves 37. Then, once the hooking piece 26 reaches a rear part in the insertion groove 37, the lock piece 371 is moved upward by being pushed by the spring and is disposed in the vicinity of an opening at the back of the insertion groove 37. Therefore, when the tool body 50 is attempted to be moved by being slid backward with respect to the battery pack 30, the hooking piece 26 inserted in the frontmost insertion groove 37 comes into contact with the lock piece 371, so that backward slide movement of the tool body 50 is restricted. Thus, the battery pack 30 is kept attached to the battery attachment 22.

In the battery pack 30 attached to the battery attachment 22, the connection terminals of the tool body 50 are electrically connected to the respective connection terminal parts 33, and thereby, electric power necessary for operation of the controller 14, the driver 12, and the like is supplied from the electricity accumulator 36 to the controller 14, the driver 12, and the like. Moreover, the first connector and the second connector 34 are electrically connected to each other, and thereby, the circuit board housed in the battery case 31 and the controller 14 are electrically connected to each other, and battery information is output from the circuit board to the controller 14.

On the other hand, to detach the battery pack 30 from the battery attachment 22, an operation is given to an operating unit provided to the battery case 31, thereby moving the lock piece 371 downward and bringing the hooking pieces 26 into a state where the hooking pieces 26 are movable to the outside of the insertion grooves 37. In this state, the tool body 50 is moved by being slid backward (in an opposite direction of the arrow A2 in FIG. 3) with respect to the battery pack 30, thereby moving the hooking pieces 26 to the outside of the insertion grooves 37. Then, the tool body 50 is moved upward (in an opposite direction of the arrow A1 in FIG. 3) with respect to the battery pack 30, thereby detaching the battery pack 30 from the tool body 50.

As explained above, in the present embodiment, the battery pack 30 is detachably mounted on the grip part 20 (the tool body 50). Thus, when the remaining battery level of the battery pack 30 decreases, a user detaches the battery pack 30 from the grip part 20 and then attaches a charged battery pack 30 to the grip part 20, so that the user can continue his/her work using the electric tool 1.

The electricity accumulator 36 is electrically connected to the connection terminal parts 33. As illustrated in FIGS. 1 and 2, the electricity accumulator 36 includes the plurality of all-solid-state batteries 35 each of which is in the form of a sheet. The thickness of one all-solid-state battery 35 is about 1 to 2 mm. The plurality of all-solid-state batteries 35 are connected to each other in series or parallel in accordance with a required voltage or capacity. In the present embodiment, the electricity accumulator 36 includes five all-solid-state batteries 35 connected to each other in series. However, this should not be construed as limiting. The number and the connection state (series connection or parallel connection) of the all-solid-state batteries 35 included in the electricity accumulator 36 may be changed in accordance with the required voltage or capacity.

Each all-solid-state battery 35 has the property that the discharge capacity increases along with a temperature rise (as the temperature increases). The discharge capacity means the quantity of electricity which can be taken out of the all-solid-state battery 35 when the all-solid-state battery 35 is discharged from a full charge state until its output voltage reaches a final voltage. That is, the all-solid-state battery 35 has the property that as the temperature of the all-solid-state battery 35 increases, the quantity of electricity which can be taken out of the all-solid-state battery 35 increases. In an example, the all-solid-state battery 35 has the property that at least within a temperature range from 25°C to 85°C, preferably within a temperature range from 0°C to 100°C, more preferably within a temperature range from -20°C to 150°C, the discharge capacity increases along with the temperature rise. Moreover, the all-solid-state batteries 35 have the property that, under a condition where the all-solid-state batteries 35 have the same remaining battery level, the output voltage increases along with the temperature rise (as the temperature increases).

The plurality of all-solid-state batteries 35 each of which is in the shape of a sheet are stacked on each other such that the thickness directions of the all-solid-state batteries 35 coincide with each other. Here, when impact force along a direction orthogonal to a stacking direction of the all-solid-state batteries 35 is applied to the electricity accumulator 36, the plurality of all-solid-state batteries 35 stacked on each other are peeled from each other or positionally displaced relative to each other, which may destabilize an electrical connection state between the plurality of all-solid-state batteries 35. In contrast, when impact force along a direction along the stacking direction of the all-solid-state batteries 35 is applied to the electricity accumulator 36, the plurality of all-solid-state batteries 35 stacked on each other are less likely to be peeled from each other and are less likely to be positionally displaced relative to each other, which is less likely to destabilize an electrical connection state between the plurality of all-solid-state batteries 35. In the present embodiment, the stacking direction of the plurality of all-solid-state batteries 35 is along a direction (Z-axis direction) connecting the ends 201 and 202 on both sides of the grip part 20 having the grip portion 21 between the ends 201 and 202. Thus, an impact applied to the electricity accumulator 36 in the direction along the Z-axis direction hardly damages the electricity accumulator 36. For example, even when the electric tool 1 is placed with great force on a placement surface (e.g., a floor surface), the plurality of all-solid-state batteries 35 stacked on each other are less likely to be peeled off from each other and are less likely to be positionally displaced relative to each other. This reduces the possibility that the electrical performance of the battery pack 30 is deteriorated.

Moreover, the battery pack 30 further includes the cushioning structure 38 which suppresses the acceleration acting on the electricity accumulator 36 from being changed.

As shown in FIG. 1, the cushioning structure 38 includes an inside cushioning member 380 housed in the battery case 31. The inside cushioning member 380 is disposed between the electricity accumulator 36 and the battery case 31. The inside cushioning member 380 supports the electricity accumulator 36 such that when acceleration acts on the battery case 31, acceleration acting on the electricity accumulator 36 is smaller than the acceleration acting on the battery case 31.

Here, the inside cushioning member 380 includes a vibration isolating sheet 381 and a plurality of spring members 382.

The vibration isolating sheet 381 is an elastic member made of a material having an elastic modulus lower than that of the material of the battery case 31. Examples of the material for the vibration isolating sheet 381 include a foam-based thermal insulating member such as urethane foam and polystyrene foam. In this case, the vibration isolating sheet 381 has a lower thermal conductivity than the battery case 31, and therefore, heat is suppressed from moving from the electricity accumulator 36 to the battery case 31. That is, the vibration isolating sheet 381 (cushioning structure 38) also serves as a thermal insulation part suppressing heat from moving from the electricity accumulator 36 to the battery case 31. Note that the material for the vibration isolating sheet 381 is not limited to the foam-based thermal insulating member but may be, for example, an elastic material such as rubber and elastomer. The vibration isolating sheet 381 is affixed to the electricity accumulator 36 to cover the entirety of the electricity accumulator 36 (the plurality of all-solid-state batteries 35). That is, the vibration isolating sheet 381 is affixed to an upper surface, a lower surface, a left surface, a right surface, a front surface, and a rear surface of the electricity accumulator 36. Thus, the vibration isolating sheet 381 (cushioning structure 38) suppresses the acceleration acting on the electricity accumulator 36 from being changed in three axial (X-axis, Y-axis, and Z-axis) directions orthogonal to one another. Moreover, in the battery pack 30, the member (the vibration isolating sheet 381) in contact with the electricity accumulator 36 (the all-solid-state batteries 35) is elastic. The elastic modulus of the member (the vibration isolating sheet 381) in contact with the electricity accumulator 36 (the all-solid-state batteries 35) is lower than the elastic modulus of the battery case 31.

The plurality of spring members 382 elastically support the electricity accumulator 36 (the plurality of all-solid-state batteries 35) covered with the vibration isolating sheet 381. The plurality of spring members 382 elastically support the electricity accumulator 36 covered with the vibration isolating sheet 381 such that the electricity accumulator 36 does not come into direct contact with the battery case 31.

Each spring member 382 is, for example, a coil spring. The plurality of spring members 382 elastically support the electricity accumulator 36 in each of the forward, backward, up, down, left, and right directions. That is, the plurality of spring members 382 include at least one (e.g., two) coil spring(s) (lower spring member(s)) provided between the electricity accumulator 36 and an inner bottom surface of the battery case 31. The plurality of spring members 382 include at least one (e.g., two) coil spring(s) (upper spring member(s)) provided between the electricity accumulator 36 and an inner top surface of the battery case 31. The plurality of spring members 382 include at least one (e.g., two) coil spring(s) (left spring member(s)) provided between the electricity accumulator 36 and an inner left surface of the battery case 31. The plurality of spring members 382 include at least one (e.g., two) coil spring(s) (right spring member(s)) provided between the electricity accumulator 36 and an inner right surface of the battery case 31. The plurality of spring members 382 include at least one (e.g., one) coil spring (front spring member) provided between the electricity accumulator 36 and an inner front surface of the battery case 31. The plurality of spring members 382 include at least one (e.g., one) coil spring (rear spring member) provided between the electricity accumulator 36 and an inner rear surface of the battery case 31.

Thus, the plurality of spring members 382 (the cushioning structure 38) suppress the acceleration acting on the electricity accumulator 36 from being changed in three axial (X-axis, Y-axis, and Z-axis) directions orthogonal to one another.

Moreover, two spring members 382 (e.g., the upper spring member and the lower spring member, the right spring member and the left spring member, or the front spring member and the back spring member) of the plurality of spring members 382 are disposed at locations where the two spring members 382 face each other with the electricity accumulator 36 provided therebetween. Thus, in a direction in which the two spring members face each other, the acceleration acting on the electricity accumulator 36 is further suppressed from being changed.

Note that the spring members 382 are not limited to the coil springs but may be leaf springs, for example. Moreover, the material for the spring member 382 may be metal or non-metal as long as the spring member 382 structurally provides elasticity.

In sum, examples of the type of the cushioning structure 38 may include: the elastic member (the vibration isolating sheet 381) made of a material having a lower elastic modulus than that of a material for the battery case 31; and the spring members 382 structurally elastic.

The battery pack 30 includes the cushioning structure 38, and therefore, for example, even when placing the electric tool 1 on a floor surface with great force applies an impact in the up/down direction to the battery case 31 or even when boring work or the like by using the tool 40 applies a vibration to the battery case 31, an impact and a vibration applied to the electricity accumulator 36 is smaller than the impact and the vibration applied to the battery case 31. This enables the occurrence of failures in the electricity accumulator 36 due to the impact and the vibration to be reduced and thus enables failures in the battery pack 30 to be reduced.

Each of the plurality of all-solid-state batteries 35 is in the shape of a rectangular sheet, and as shown in FIG. 3, the plurality of all-solid-state batteries 35 have the longitudinal directions along the direction (in the present embodiment, in the forward/backward direction) of the tool 40 to be attached to the tool attachment part 11. That is, the plurality of all-solid-state batteries 35 are each disposed such that its long side 35A is along the X-axis direction and its short side 35B is along the Y-axis direction. Thus, compared to the case where the plurality of all-solid-state batteries 35 are arranged such that their long sides 35A are along a direction orthogonal to the orientation (the forward/backward direction) of the tool 40, the width of the battery pack 30 in a direction orthogonal to the direction of the tool 40 can be reduced with the tool 40 being directed to a work target.

Moreover, the plurality of all-solid-state batteries 35 are thermally coupled to each other. For example, the plurality of all-solid-state batteries 35 are thermally coupled to each other via a member (hereinafter also referred to as a "heat-transfer member") having a higher thermal conductivity than each of the all-solid-state batteries 35. The heat-transfer member is made of, for example, a resin having a high thermal conductivity. Therefore, heat generated from one all-solid-state battery 35 is transmitted via the heat-transfer member to another all-solid-state battery 35 and increases the temperature of the another all-solid-state battery 35. Preferably, the plurality of all-solid-state batteries 35 are thermally coupled to each other via the heat-transfer member such that the temperatures of the plurality of all-solid-state batteries 35 are substantially the same.

Note that in the battery pack 30, the number, the area, and the connection state of the all-solid-state batteries 35 included in the electricity accumulator 36 may be changed in accordance with a voltage and capacity required for driving the electric tool 1. The voltage value of the electricity accumulator 36 depends on the voltage value of each all-solid-state battery 35, the number of the all-solid-state batteries 35 connected in series, and the like. The capacity of the electricity accumulator 36 depends on the area of each all-solid-state battery 35, the number of the all-solid-state batteries 35 connected in parallel, and the like. For example, a plurality of battery packs 30 including different numbers of all-solid-state batteries 35 are prepared, and a user may select and use an appropriate battery pack 30 as necessary.

Moreover, the battery pack 30 of the present embodiment includes, as the electricity accumulator 36, the all-solid-state batteries 35 each having the property that the discharge capacity increases along with the temperature rise by heat. The cushioning structure 38 serves also as a thermal insulation part suppressing heat from moving from the electricity accumulator 36 to the battery case 31. Thus, with the battery pack 30 of the present embodiment, heat generated from the electricity accumulator 36 increases the temperature of the electricity accumulator 36 itself, which can increase the discharge capacity of the battery pack 30. Therefore, it is possible to increase the quantity of electricity which can be taken out of the battery pack 30 per charge of the battery pack 30.

Moreover, in the electric tool 1 of the present embodiment, the battery pack 30 includes, as the electricity accumulator 36, the all-solid-state batteries 35. In the case of a conventional battery including liquid as its electrolyte, an excessive temperature rise may cause expansion leading to damage to the battery. In contrast, in the case of the all-solid-state batteries 35, the ratio of the expansion to the temperature rise is smaller than in the case of the conventional battery. Thus, adopting the all-solid-state batteries 35 as the electricity accumulator 36 enables the possibility that the battery pack 30 is damaged or the like to be reduced even when the temperature of the electricity accumulator 36 is increased by heat generated from the electricity accumulator 36.

### (3) Variations

The embodiment in the present disclosure is not limited to the embodiment described above. Rather, the embodiment described above may be readily modified in various manners depending on a design choice or any other factor without departing from the scope of the present disclosure. Variations of the embodiment described above will be enumerated below.

### (3.1) First Variation

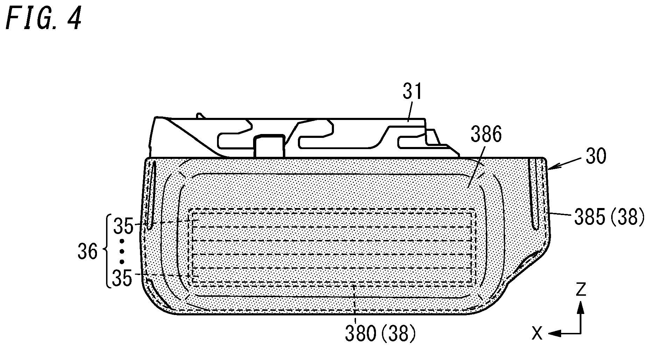

A battery pack 30 and an electric tool 1 according to a first variation will be described below with reference to FIG. 4. In the battery pack 30 and the electric tool 1 of the present variation, components similar to those in the embodiment are denoted by the same reference signs, and the description thereof is omitted.

The battery pack 30 of the present variation includes, as a cushioning structure 38, an outside cushioning member 385 disposed outside a battery case 31 in addition to the inside cushioning member 380. The outside cushioning member 385 includes a vibration isolating sheet 386 in this variation. The vibration isolating sheet 386 is an elastic member made of a material having a lower elastic modulus than the material for the battery case 31. Examples of the material for the vibration isolating sheet 386 include a foam-based thermal insulating member such as urethane foam and polystyrene foam and an elastic material such as rubber and elastomer. The vibration isolating sheet 386 covers at least part of side surfaces (a front surface, a rear surface, a left surface, and a right surface) and a lower surface of the battery case 31.

The battery pack 30 of the present variation also enables the occurrence of failures in an electricity accumulator 36 due to an impact and a vibration to be reduced and thus enables failures in the battery pack 30 to be reduced.

### (3.2) Other Variations

In a variation, the inside cushioning member 380 may include either the vibration isolating sheet 381 or the spring members 382. For example, the spring members 382 may directly in contact with the electricity accumulator 36 to elastically support the electricity accumulator 36. Alternatively, the vibration isolating sheet 381 is supported in the battery case 31 and is housed in the battery case 31.

In a variation, an elastic member constituting the inside cushioning member 380 is not limited to being in the shape of a sheet as in the case of the vibration isolating sheet 381. The shape of the inside cushioning member 380 may be in the shape of a case hosing the electricity accumulator 36 or may have a projection shape (rib shape) which is in contact with only part of the electricity accumulator 36.

In a variation, it is not essential that the cushioning structure 38 suppresses the acceleration acting on the electricity accumulator 36 from being changed in directions along the three axes orthogonal to one another. However, the cushioning structure 38 preferably suppresses the acceleration acting on the electricity accumulator 36 from being changed in a direction along the stacking direction (Z-axis direction) of the all-solid-state batteries 35.

In a variation, the plurality of spring members 382 do not have to include all of the upper spring member, the lower spring member, the front spring member, the back spring member, the right spring member, and the left spring member but may include only, for example, the upper spring member and the lower spring member. Also in this case, the acceleration acting on the electricity accumulator 36 can be suppressed from being changed in directions along the three axes orthogonal to one another.

### (4) Aspects

Based on the embodiment, variations, and the like described above, the following aspects are disclosed.

A battery pack (30) of a first aspect is a battery pack (30) for an electric tool (1). The battery pack (30) is attachable to a tool body (50). The tool body (50) includes: a tool attachment part (11) to which a tool (40) is to be attached; and a driver (12) configured to drive the tool (40). The battery pack (30) includes an electricity accumulator (36), a battery case (31), and a cushioning structure (38). The electricity accumulator (36) includes an all-solid-state battery (35). The electricity accumulator (36) is configured to accumulate electric power to be supplied to the driver (12). The battery case (31) houses the electricity accumulator (36). The cushioning structure (38) is configured to suppress acceleration acting on the electricity accumulator (36) from being changed.

With this aspect, even when an impact is applied to the battery case (31) or a vibration is applied to the battery case (31), the impact and the vibration applied to the electricity accumulator (36) are suppressed. Thus, failures in the electricity accumulator (36) are reduced, and failures in the battery pack (30) are thus reduced.

In a battery pack (30) of a second aspect referring to the first aspect, the cushioning structure (38) includes an elastic member made of a material having an elastic modulus lower than an elastic modulus of a material for the battery case (31). The elastic member is disposed between the electricity accumulator (36) and the battery case (31). The elastic member is configured to support the electricity accumulator (36) such that when acceleration acts on the battery case (31), the acceleration acting on the electricity accumulator (36) is smaller than the acceleration acting on the battery case (31).

With this aspect, the acceleration acting on the electricity accumulator (36) is suppressed from being changed, thereby reducing failures in the battery pack (30).

In a battery pack (30) of a third aspect referring to the first aspect, the cushioning structure (38) includes a plurality of spring members (382). The plurality of spring members (382) are each disposed between the electricity accumulator (36) and the battery case (31). The plurality of spring members (382) are each configured to support the electricity accumulator (36) such that when acceleration acts on the battery case (31), the acceleration acting on the electricity accumulator (36) is smaller than the acceleration acting on the battery case (31).

With this aspect, the acceleration acting on the electricity accumulator (36) is suppressed from being changed, thereby reducing failures in the battery pack (30).

In a battery pack (30) of a fourth aspect referring to the third aspect, the plurality of spring members (382) include two spring members disposed at locations where the two spring members face each other with the electricity accumulator (36) provided between the two spring members.

With this aspect, in a direction in which the two spring members face each other, the acceleration acting on the electricity accumulator (36) is further suppressed from being changed.

In a battery pack (30) of a fifth aspect referring to any one of the first to fourth aspects, the cushioning structure (38) is configured to suppress the acceleration acting on the electricity accumulator (36) from being changed in directions along three axes orthogonal to one another.

With this aspect, the acceleration acting on the electricity accumulator (36) from being changed in the directions along the three axes is suppressed, thereby reducing failures in the battery pack (30).

In a battery pack (30) of a sixth aspect referring to any one of the first to fifth aspects, the cushioning structure (38) includes an outside cushioning member (385) provided on an outer side of the battery case (31).

With this aspect, the acceleration acting on the electricity accumulator (36) is suppressed from being changed, thereby reducing failures in the battery pack (30).

In a battery pack (30) of a seventh aspect referring to any one of the first to sixth aspects, the cushioning structure (38) is configured to serve also as a thermal insulation part which suppresses heat from moving from the electricity accumulator (36) to the battery case (31).

With this aspect, the temperature of the electricity accumulator (36) can be increased by heat generated from the electricity accumulator (36), thereby increasing the quantity of electricity which can be taken out of the battery pack (30).

An electric tool (1) of an eighth aspect includes: the battery pack (30) of any one of the first to seventh aspects; and the tool body (50).

With this aspect, failures in the electricity accumulator (36) are reduced, and failures in the battery pack (30) are thus reduced.

The second to seventh aspects are not essential configurations of the battery pack (30) and may thus be omitted.

### Reference Signs List

- 1: Electric Tool
- 11: Tool Attachment Part
- 12: Driver
- 30: Battery Pack
- 31: Battery Case
- 35: All-Solid-State Battery
- 36: Electricity Accumulator
- 38: Cushioning Structure
- 382: Spring Member
- 385: Outside Cushioning Member
- 40: Tool
- 50: Tool Body

## Claims

1. A battery pack for an electric tool, the battery pack being attachable to a tool body, the tool body including a tool attachment part to which a tool is to be attached and a driver configured to drive the tool, the battery pack comprising:
an electricity accumulator including an all-solid-state battery and configured to accumulate electric power to be supplied to the driver;
a battery case housing the electricity accumulator; and
a cushioning structure configured to suppress acceleration acting on the electricity accumulator from being changed.

2. The battery pack of claim 1, wherein
the cushioning structure includes an elastic member made of a material having an elastic modulus lower than an elastic modulus of a material for the battery case, and
the elastic member is disposed between the electricity accumulator and the battery case and is configured to support the electricity accumulator such that when acceleration acts on the battery case, the acceleration acting on the electricity accumulator is smaller than the acceleration acting on the battery case.

3. The battery pack of claim 1, wherein
the cushioning structure includes a plurality of spring members,
the plurality of spring members are each
disposed between the electricity accumulator and the battery case, and
configured to support the electricity accumulator such that when acceleration acts on the battery case, the acceleration acting on the electricity accumulator is smaller than the acceleration acting on the battery case.

4. The battery pack of claim 3, wherein
the plurality of spring members include two spring members disposed at locations where the two spring members face each other with the electricity accumulator provided between the two spring members.

5. The battery pack of any one of claims 1 to 4, wherein
the cushioning structure is configured to suppress the acceleration acting on the electricity accumulator from being changed in directions along three axes orthogonal to one another.

6. The battery pack of any one of claims 1 to 5, wherein
the cushioning structure includes an outside cushioning member provided on an outer side of the battery case.

7. The battery pack of any one of claims 1 to 6, wherein
the cushioning structure is configured to serve also as a thermal insulation part which suppresses heat from moving from the electricity accumulator to the battery case.

8. An electric tool comprising:
the battery pack of any one of claims 1 to 7; and
the tool body.
